# EUROPEAN PATENT SPECIFICATION

(11) **EP 1 642 309 B1**
(45) Date of publication and mention of the grant of the patent: **05.03.2008**
(21) Application number: 04743189.5
(22) Date of filing: 01.07.2004
(51) Int. Cl.: H01H 37/54, A47J 27/21, H05B 1/02

(54) **IMPROVEMENTS RELATING TO THERMAL CONTROL UNITS**
VERBESSERUNGEN BEI THERMISCHER REGLERN
AMELIORATIONS APPORTEES A DES UNITES DE REGULATION THERMIQUE

(30) Priority: 08.07.2003 GB 0316037
(43) Date of publication of application: 05.04.2006
(73) Proprietor: OTTER CONTROLS LIMITED, Buxton, Derbyshire SK17 6LA (GB)
(72) Inventor: O'Neill, Robert, Andrews, Buxton, Derbyshire SK17 9NQ (GB)
(74) Representative: Cross, James Peter Archibald
(86) International application number: PCT/GB2004/002843
(87) International publication number: WO 2005/006370

(56) References cited:
- EP-A- 1 233 649
- WO-A-99/48333
- GB-A- 2 194 099
- GB-A- 2 381 385

## Description

### Field of the Invention

This invention concerns improvements relating to thermal control units in general, and particularly - but not exclusively - to thermal control units for liquid heating vessels such as kettles, jugs, urns, pans and the like.

A preferred embodiment of the invention is especially applicable to a thermal control unit for an electrical liquid heating vessel which is operable to interrupt the electrical power supply to the heating element of the vessel in the event of a so-called "element over-temperature" condition. Such a condition can arise, for example, in circumstances where the element of the vessel is powered without sufficient liquid being present in the vessel, or where the vessel is allowed to boil dry. Controls of this type are typically known as "dry-boil" or "element over-temperature" controls. The present invention is particularly - but not exclusively - concerned with the addition of a steam control to such a dry boil control so that in addition to its element protecting function, the control will also switch off the vessel element when water boils in the vessel.

### Background to the Invention

One very well known dry boil control unit is disclosed in granted United Kingdom Patent No. 2194099, and a preferred embodiment of the invention will be described hereafter with particular reference to the control unit disclosed in this prior application. It will be understood and should be noted, however, that the teachings of the invention are generally applicable to many different control units and hence that the scope of the present invention should not be read as being limited to the particular arrangements described.

The control unit (as will later be explained in detail) of this prior publication (known in the industry as the "X1" control and derivatives thereof) comprises a bimetal that is mounted in or on a collapsible thermoplastic carrier. The action of the bimetal in the control unit provides a primary control function, and a thermally induced collapse of the carrier provides a secondary - or back-up - control function. Thus, the control effectively provides two-stage protection in an element over-temperature situation.

The control is arranged to protect the element of a water boiling vessel, in particular against excessive temperatures such as might arise in an aforementioned over-temperature condition. In use of the control, the bimetal and its carrier are urged into contact with the rear surface of a head plate of the heating element so as to be subject to the operational temperature of the heating element. The bimetal is arranged to disconnect the heating element from its power supply in the event of the element overheating.

If the bimetal should fail to achieve its primary control function (for example on account of the switch contacts within the control welding together), the continued rise in temperature of the element causes the thermoplastic carrier to begin to collapse thereby initiating the aforementioned secondary control function. The carrier is arranged (when affixed to the cold tails of the element) to bias spring terminals within the control into contact with respective electrical supply terminals, and the collapse of the carrier allows the spring terminals to resile from the supply terminals, thereby interrupting the electrical path between the supply terminals and the element.

"X1" controls, and developments thereof, have enjoyed great commercial success and provide excellent dry-boil / element over-temperature protection. However, in normal use of a liquid heating vessel such as a kettle, for example, it is not sufficient solely to rely on an X1 control or equivalent. Rather, it is necessary also to provide a so-called boil control which is operable to switch off or reduce the power supply to the heating element of a vessel when the liquid inside the vessel reaches a predetermined boil temperature. In a kettle, for example, a steam control commonly functions to interrupt the power supply to the element when the water in the kettle boils. Steam controls are typically manually operable by a user, and in normal use of the kettle will provide the primary form of thermal control, the X1 or equivalent dry boil control only operating in the relatively rare event of a user switching on the kettle without first having filled it with water or a steam control failure leading to the kettle boiling dry.

Steam controls typically include a bimetal, and a trip lever which can be set by a user to an "on" position where a pair of electrical contacts are biased into conducting abutment. When the bimetal reaches a predetermined temperature, it changes shape and drives the trip lever to an "off position where the electrical contacts are opened, thereby breaking the electrical path to the element.

A steam control specially adapted for use with the X1 dry boil control is described in granted United Kingdom Patent No. 2212664 and is known in the industry as the J control. The J steam control comprises a separate control which is typically mounted in the handle of the vessel and wired to the X1 control. For example, in a so-called "jug kettle" the X1 control is provided at the base of the handle, the steam control is provided in the handle towards the top of the kettle, and wiring connecting one to the other passes down the handle of the kettle. This arrangement is shown in Fig. 6C of GB2212664 abovementioned. In an alternative arrangement, shown in Fig. 6B of GB 2212664, the J type steam control is arranged to plug into the top of the X1 control.

Whilst the X1 dry boil control and the J steam control have proven to be effective and have achieved considerable commercial success, not least on account of the flexibility that they afford to the appliance designer, their success comes at a price and, in today's highly competitive world, the price is sometimes too high and as a consequence less costly and less flexible solutions have occasionally been preferred.

It is apparent, therefore, that a redesign of the separate X1/J arrangement may be beneficial for some applications. However, one factor to consider is the investment in these existing controls. Whilst it would be possible to design a new control from scratch, such a solution would negate the design investment in the existing controls. It would be advantageous, therefore, if any new design of control could be configured so that it took advantage of existing design investment.

Patent publication WO-A-99/48333 discloses a thermally responsive control according to the pre-characterising portion of claim 1.

### Object & Statement of the Invention

According to the present invention, there is provided a thermally responsive control according to claim 1.

Further aspects of the invention, and preferred features of those aspects of the invention, are set out in the claims and elsewhere in the present application.

### Brief Description of the Drawings

A preferred embodiment of the invention will now be described, by way of example only, with reference to the accompanying drawings, in which:
Figs. 1a, 1b and 1c are schematic representations of the thermal control unit described in UK Patent No. 2194099;
Figs. 2a and 2b are perspective view of an assembled control unit in accordance with an embodiment of the invention;
Fig. 3 is an exploded view of the control unit depicted in Figs. 2a and 2b;
Figs. 4a and 4b, 5a and 5b, and 6a and 6b are schematic cross-sectional views of the control of Figs. 2a and 2b in various operating states; and
Figs. 7a to 7e are schematic representations of modified and new components as compared to the control depicted in Figs. 1a to 1c.

### Detailed Description of Preferred Embodiment

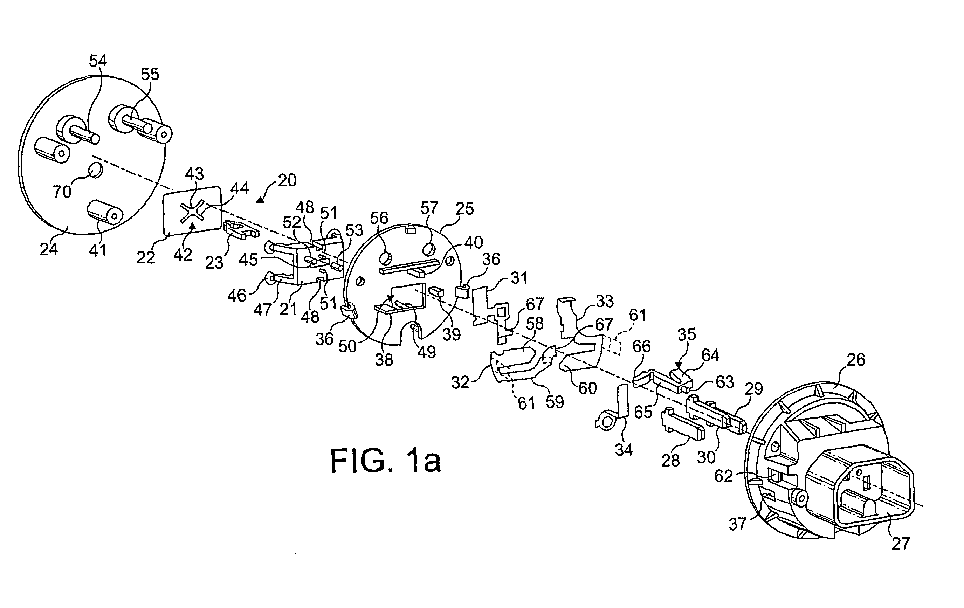

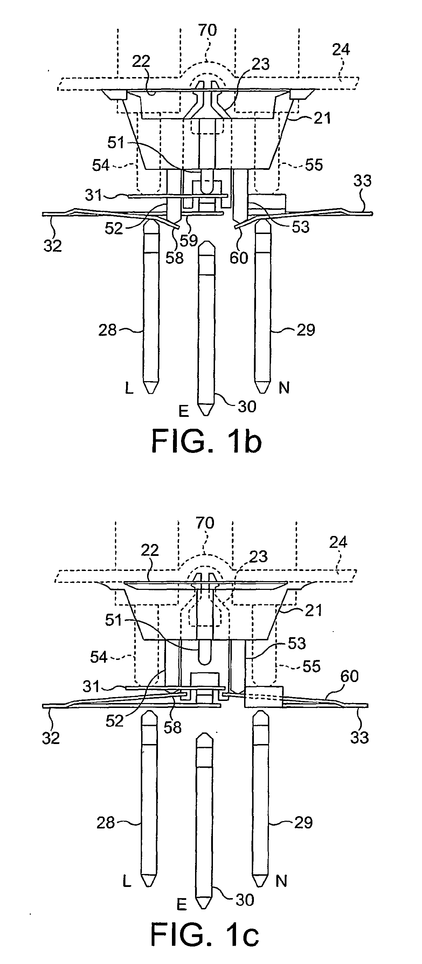

Figs. 1a, 1b and 1c are schematic representations of the thermal control unit described in UK Patent No. 2194099 aforementioned.

This control unit is the X1 control unit aforementioned and its construction and operation is well described in UK Patent No. 2194099 and will not be repeated here. Suffice it to say that in use of the control, the attachment of the control to the heating element head 24 causes the bimetal blade 22 to be pressed against the surface of the element head in close thermal contact therewith and causes the blade carrier 21 to be urged inwardly of the control against spring bias developed by abutment of the posts 52, 53 provided on the carrier with respective parts 58, 60 of internal springs 32, 33 of the control. This inward movement of the carrier in turn causes the springs 58, 60 to make contact with electrical terminals 28, 29 of the control. A push rod 23 is coupled to the bimetal blade 22 and extends through an aperture in the carrier 21 to a location within the control where cooperating switch contacts are provided by a spring 31 and by an extension of the spring 58 abovementioned. Heating element electrical terminations 54, 55 contact respective parts of the springs 31, 33 to enable power to be supplied from the control terminals 28, 29 to the heating element.

In operation of the X1 control, an overtemperature condition of the heating element will be sensed by the bimetal blade 22 which will normally cause the switch contacts abovementioned to be opened, thereby disconnecting the heating element from its electrical supply. In the event, however unlikely, that the bimetal blade 22 fails to open its associated contacts, the heating element temperature will continue to rise. A second mechanism then ensures that the heating element is switched off, in that the carrier 21 begins to melt and undergoes forced deformation by the action of the spring parts 58, 60 so that electrical contact between the springs and the control terminals 28, 29 is broken.

For a more complete understanding of the construction and operation of the X1 control, reference may be had to UK Patent No. 2194099.

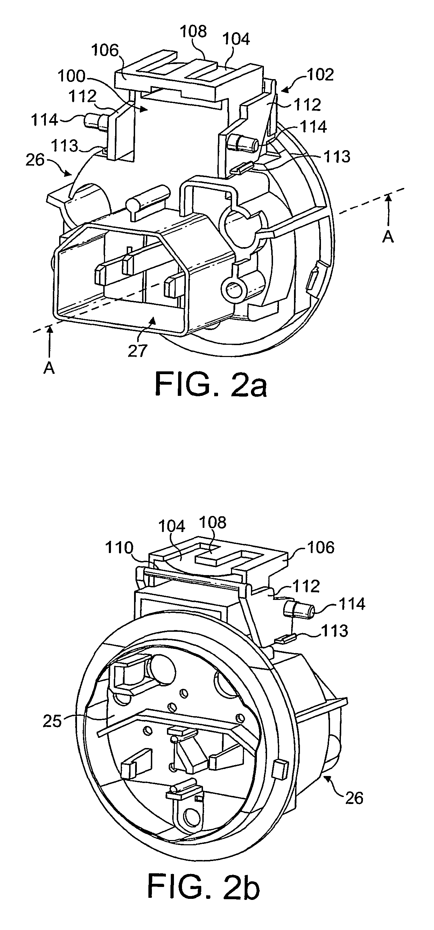

Figs. 2a and 2b are perspective views of an assembled control unit in accordance with an embodiment of the invention which is a modification of the X1 control abovementioned. Fig. 2b illustrates the control as viewed from the side that abuts against the element head in use. Fig. 2a illustrates the opposite side of the control, although certain components have been omitted for clarity.

As mentioned above, an advantage of the control of the invention is that it provides significant advantages without requiring major modifications to the X1 control depicted in Figs. 1a to 1c. To this end the control of the invention has many components in common with those of the existing control and serving a common function, and those common features are referenced hereinafter by the same reference number to facilitate their identification and will be described only briefly, it at all, in the following.

Looking now at Figs. 2a and 2b, the most immediately apparent difference between the control of the invention and the X1 control previously described herein, is that in the new control the main moulding 26 is formed with an upward (as depicted in Figs 2a and 2b) and generally box-shaped moulding extension 100. A pivotal trip lever 102 is mounted on the extension 100 and operates in conjunction with a steam-sensing bimetal blade 104 (in this particular example a circular bimetal blade) to provide a steam control as before described, the bimetal blade 104 being slotted into a part 106 formed on the upper surface of the moulding extension 100. This part 106 has internal slots 126 for receiving opposed edges of the bimetal and includes a tongue 108 having a bimetal retaining peg 128 provided on its underside and configured to mate with an aperture 130 in the blade 104 to ensure retention of the blade in the moulding extension. The slots 126 are wedge shaped, allowing for movement of the front edge of the bimetal whilst the opposite, rear edge remains fixed in position.

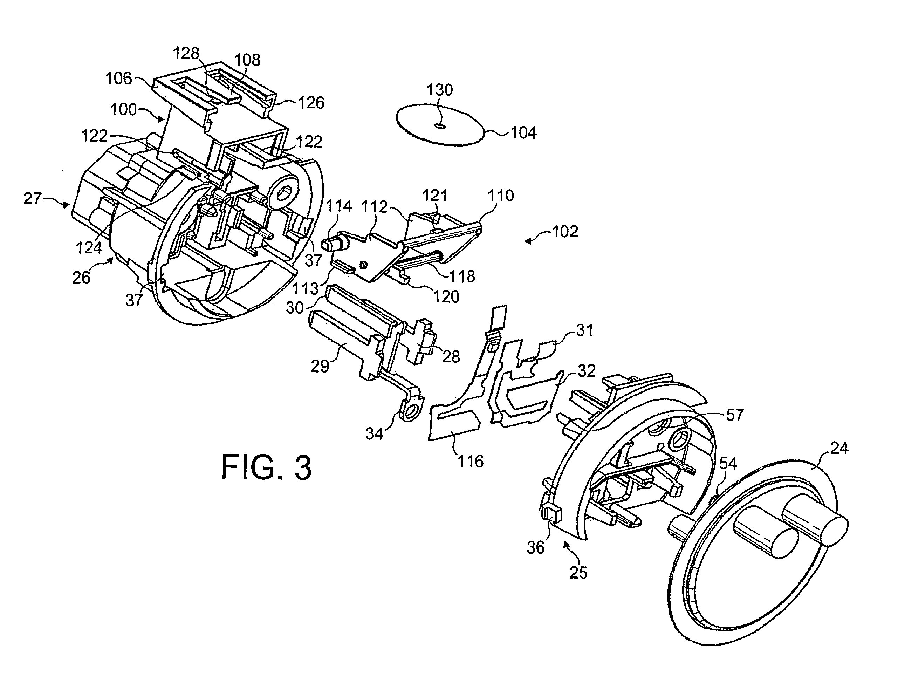

The trip lever 102 comprises a bar 110 (Fig. 2b) that terminates at each end in a side plate 112. Each plate 112 is formed with a stepped projecting pin 114, and the pins 114 act with the bar 110 to provide a means to enable an ON/OFF rocker knob (not shown) to be coupled to the control unit. The vertical side plates 112 are also each formed with a lateral ledge 113, and the function of these ledges along with further features of the trip lever will later be described with reference to Fig. 3.

Fig. 3 is an exploded view of the control unit depicted in Figs. 2a and 2b. Various components have been omitted for clarity, but clearly visible are the principal components of the control unit, namely the main moulding 26 and socket inlet 27 (including the extension 100) and the inner moulding 25. The inner moulding 25 fits to the heating element head 24 in use so that the bimetal of the carrier sub-assembly (not shown, but substantially as in the previously described X1 control) is biased against the element head 24 for heat transfer.

The inner moulding 25 co-operates with the main moulding 26, as in the X1 control, to define a chamber for accommodating the L, N and E terminal pins 28, 29 and 30, the springs 31, 32 (shown as being in contact with the spring 31), 116 and 34 and a latching mechanism (not shown). As will immediately be appreciated from comparison of the controls shown in Fig 1a and 3, the neutral spring 116 differs significantly from the neutral spring 60 of the X1 control. These differences will later be described in detail.

When the control is fully assembled and coupled to an element, the line leaf spring 32 and (L) line spring 31 will be biased together to make electrical contact. The line leaf spring 32 abuts at one end against the head of the live terminal 28, the other end of the line leaf spring 32 is formed with a contact that mates with a similar contract on one end of the (L) line spring 31, and a knee on the other end of the live spring 31 abuts against one of the two cold tails (not visible) of the element that projects through an aperture 57 in the inner moulding 25. The neutral spring 116 makes contact at one end with the head of the neutral terminal 29 and, as will later be described in detail, can be moved to abut the other cold tail 54 that projects from the element head end 24 and through another apertures (not visible) in the inner moulding 25.

The dry-boil or over-temperature protection proffered by the control functions in a similar manner to that of the control of Figs. 1a, 1b and 1c, and for brevity the functionality of this aspect of the invention will not be further described herein. Readers requiring further details of this aspect of the control of the invention are referred to the description of Figs. 1a, 1b and 1c provided above and in UK Patent No. 2194099.

Fig. 3 also provides better views of the trip lever 102 and the bimetal blade 104 and of their assembly into the control. The trip lever comprises a second horizontal bar 118 and a stepped toggle 120 projects forwardly from the second bar 118 as shown for cooperation with the neutral leaf spring 116. The first horizontal bar 110 also comprises a pip 121 that projects rearwardly as shown for cooperation with the bimetal 104. The functions of the toggle 120 and pip 121 will be described later in more detail.

The second horizontal bar 118 is arranged to be received in lateral slots 122 formed in side panels of the aforementioned moulding extension 100 so that the side plates 112 locate outside of the side panels aforesaid and the trip lever 102 can pivot with respect to the moulding extension. The main moulding 26 is formed with a pair of shouldered plateaux 124 that cooperate with the lateral flanges 113 of the trip lever vertical plates 112 to retain the trip lever in place on the main moulding 26.

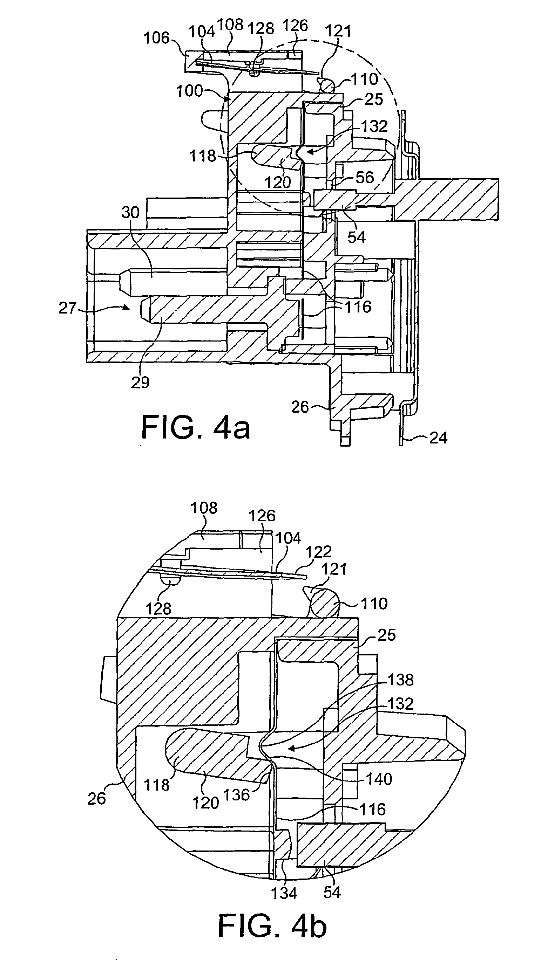

Fig. 4a is a schematic vertical cross-sectional view of the control along the line A-A in Fig. 2a and with the control attached to the head of an exemplary heating element. Fig. 4b is an enlarged view of part of Fig. 4a. Fig 4 illustrates the control in its OFF state where the electrical path is interrupted, and the steam control is in its "cold" condition. In other words, Fig. 4 shows the control as it would look when an associated vessel has not yet been switched on by a user, and when any liquid in the vessel is not at a high enough temperature to cause the steam control bimetal 104 to operate.

In the OFF state depicted, the trip lever 104 is at one end of its range of pivotal movement and the first horizontal bar 110 bears upon the upper surface of the housing extension 100. The stepped toggle 120 carried by the second bar 118 rests against the neutral spring 116 at the base of a cam-forming knee bend 132 formed therein. The neutral spring 116 is trapped, above and below the knee-bend 132, between the inner 25 and main 26 mouldings, and (as will later be described) it is the interaction of the toggle 120 and knee bend 132 which resiliently moves a contact 134 on the neutral spring into and out of abutment with the heating element cold tail 54. As in the X1 control, the neutral spring 116 is arranged to make electrical contact, at its lowermost point, with the neutral terminal 29 of the control. It will be appreciated, therefore, that it is the movement of the contact 134 into and out of abutment with the cold tail 54 that makes or breaks an electrical path between the neutral terminal 29 and cold tail 54.

In the state of the control that is shown in Fig. 4, the bimetal 104 is in its cold condition where it is generally dish shaped with its concave surface uppermost. In this state, as can be seen from Fig. 4b, the front edge of the bimetal is spaced from the pip 121 that is provided on the first bar 110 of the trip lever, and the bimetal rests upon the lower surface of its retaining wedge-shaped groove.

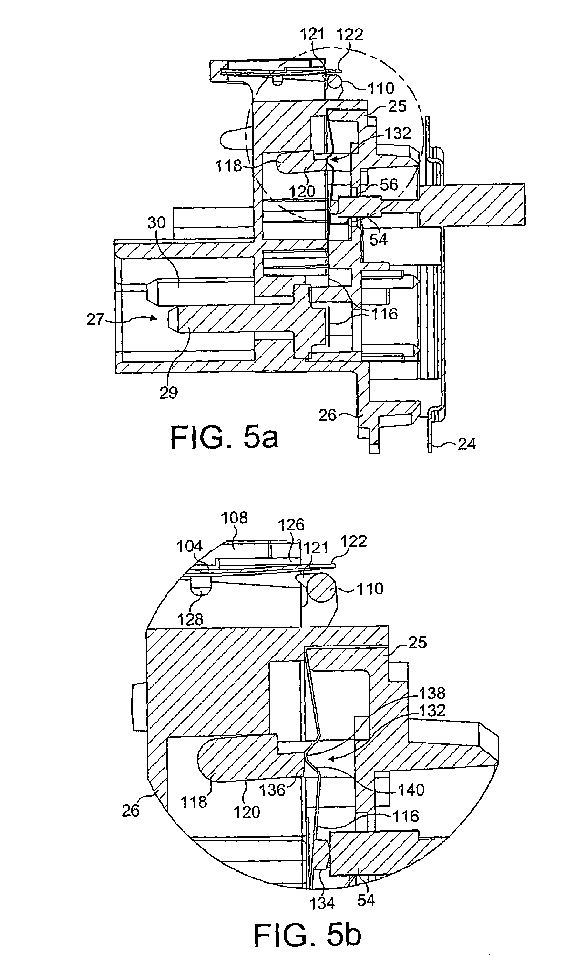

Fig. 5a illustrates what happens when the control of Fig. 4 is switched to the ON position. Fig. 5b is an enlarged view of part of Fig. 5a. As shown, pivoting the trip lever 102 upwards about the second bar 118 (in a direction away from the cold tail 54) causes the first bar 110 and pip 121 to move into contact with the underside of the front edge 122 of the bimetal blade 104 and lift the blade front edge to a position where it is generally horizontal.

As the trip lever pivots, so the stepped toggle 120 carried by the second bar 118 rides up the knee bend 132 formed in the neutral spring 116, and this (as mentioned above) drives the contact 134 on the spring 116 into abutment with the heating element cold tail 54. In this state the neutral spring 116 forms an electrical path between the neutral terminal pin 29 and the cold tail via the contact 134 so that the heating element can be powered.

When the trip lever has been pivoted upwards to its fullest extent (as depicted most clearly in Fig. 5b where the upper surface of the toggle 120 abuts an internal rib in the control) a substantially flat end part 136 of the stepped part of the toggle 120 bears against an apex 138 of the knee-bend 132 of neutral spring 116. The interaction between the flat end part 136 and the apex 138 holds the trip lever 102 in an anticlockwise pivoted position where the contact 134 is held against the cold tail 54. A particular advantage of this arrangement is that the ON travel stop formed by the aforementioned internal rib is close to the point at which the toggle 120 engages the neutral spring 116, thereby enabling close control of the relative positions of the toggle 120 and the spring 116.

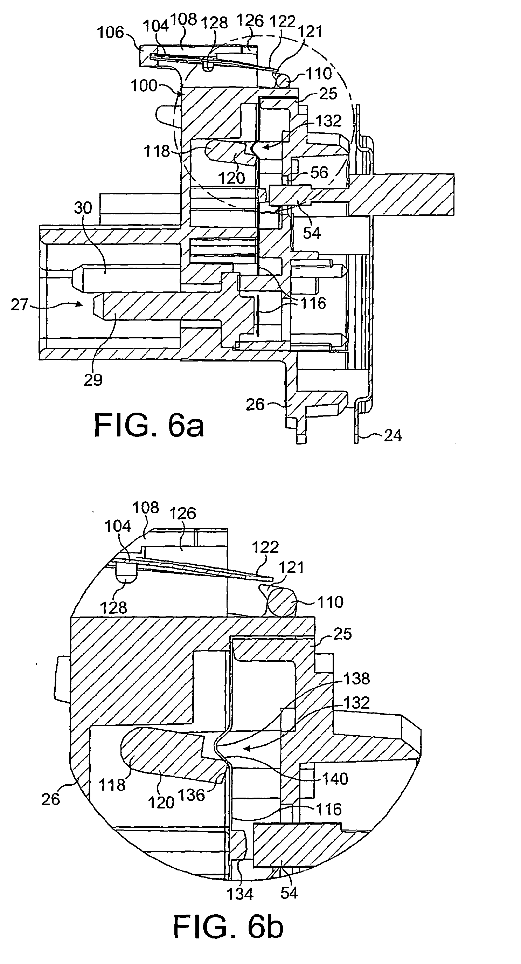

Fig. 6a illustrates the switching of the control from the ON position shown in Fig. 5 to an OFF-position in response to switching of bimetal 104 to its oppositely dished configuration where water boils in the associated vessel and steam impinges on the bimetal. As the blade switches from its cold state to its hot state with a snap action, so the free end 122 of the blade urges the pip 121 (and hence the trip lever 102) downwards. As the trip lever 102 is urged downwards the end part 136 of the toggle 118 moves off the apex 138 of the knee bend and is urged by the force of the neutral spring to slide down the inclined part 140 of the knee bend 132 that is below the apex 138. This allows the contact 134 on the neutral spring 116 to resile from the cold tail 54 with a snap action, thereby rapidly breaking the electrical path between the cold tail 54 and the neutral terminal 29 and switching off the heating element.

The bimetal blade 104 will remain in its hot state until it has cooled below its trip temperature (the temperature at which it changes from one state to the other), whereupon the blade will revert to its cold state and the control will be as depicted in Fig. 4.

An advantage of the arrangement proposed is that a user can implement a so-called "forced reset" by moving the trip lever upwards, thereby urging the contact 134 into abutment with the cold tail 54. This allows the user to supply power to the element even if the bimetal has not yet reset to its cold position.

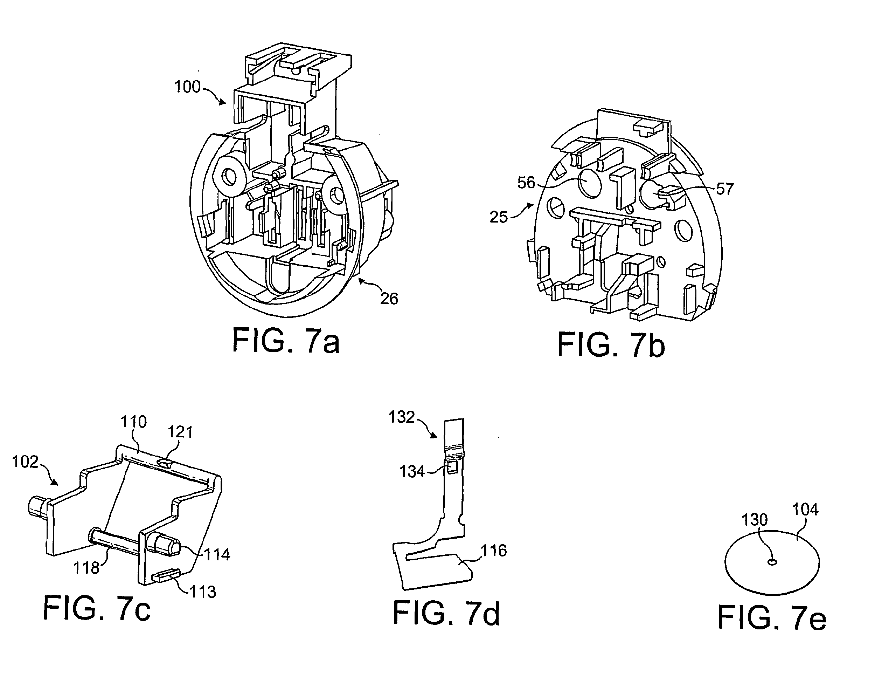

Figs. 7a to 7e are schematic representations of modified and new components as compared to the control depicted in Figs. 1a to 1c.

Fig. 7a is a perspective view of the modified main moulding 26. As will be appreciated from a comparison of the moulding depicted in this figure and the moulding depicted in Fig. 1a, the principal difference comprises the addition of the moulding extension 100. Advantageously, as the new moulding is - in the main - roughly the same shape as the existing moulding, it is considered that it should be possible simply to adapt the existing moulding to include additional features. Similarly, the inner moulding 25 depicted in Fig. 7b is - in the main - generally the same shape as the existing inner moulding, the principal difference being the addition of a moulding extension that fits over the main moulding extension 100 when the inner moulding is secured to the main moulding.

The trip lever and neutral spring depicted in Figs. 7c and 7d, respectively, are new components as compared to the control depicted in Fig. 1a. The bimetal blade 104 depicted in Fig. 7e is a new component for this control, but has in fact been "borrowed" from another control manufactured by the applicant (known in the art as the A1 Control).

It will be apparent, therefore, that the tooling modifications required to implement this new control are relatively minor, and consist in the main of additions to existing mouldings. This allows the manufacture of this control to be implemented at relatively low cost.

Various aspects of the invention have been described herein by way of example. It will be understood, however, that modifications may be made to the particular embodiment disclosed without departing from the scope of the invention. For example, whereas the invention has been described with reference to the addition of an integral steam control to an X1 dry boil control, the invention is not limited to use with X1 controls and their derivatives. Furthermore, whereas in the foregoing reference has been made to various directions (up, down, etc.) it will be understood that these directions are merely provided for illustration and are not to be construed as being any sort of limitation as to the orientation of the components of the invention.

## Claims

1. A thermally responsive control for a liquid heating vessel comprising a snap acting bimetallic actuator (104), a trip lever (102) pivotally mounted to be responsive to operation of said bimetallic actuator (104) and switch means operated by said trip lever (102), said switch means including a spring (116) operable to be urged with a spring force into contact with a part (120) of said trip lever (102) and having a cam surface (132) which is traversed by said part (120) during pivotal movement of the trip lever (102) to develop switch-actuating movement, **characterised in that** said spring (116) is electrically conductive and is arranged to carry electrical current in operation of the control.

2. A control according to claim 1, wherein the spring (116) has a knee bend (132) constituting said cam surface and constituting a toggle with said trip lever part (120).

3. A control according to claim 1 or claim 2, wherein said spring (116) itself constitutes a moving contact (134) of said switch means and is moved in operation of the control by said trip lever part (120) into and out of electrical contact with a fixed contact (29) of the control.

4. A control according to any preceding claim, wherein said snap acting bimetallic actuator (104) is a dished circular bimetal retained in a body moulding (100) of the control, said trip lever (102) is pivotally mounted to said body moulding (100) and said spring (116) is provided in said body moulding (100).

5. A control according to any preceding claim, wherein said snap-acting bimetallic actuator (104) is configured to switch from a cold state to a hot state at or around 80 degrees centigrade and on switching to act on said trip lever (102) to switch the switch means from an on state to an off state.

6. A control according to Claim 5, wherein the bimetallic actuator (104) is configured to reset from said hot state to said cold state on cooling without switching the switch means to said on state.

7. A control according to Claim 6, wherein the switch means may only be reset to its on state, once the bimetallic actuator (104) has reset from said hot state to said cold state on cooling, by manually operating the trip lever (102) to switch the switch means to said on state.

8. A control according to any of claims 4 to 7, wherein said bimetallic actuator (104) is slotted into a groove (106) formed in said body moulding (100), said groove (106) being shaped to permit movement of one end of a diameter of the bimetallic actuator (104) whilst the opposite end remains substantially static.

9. A control according to any of claims 4 to 8, wherein the bimetallic actuator (104) has a central aperture (130) and a portion (108, 128) of the body moulding (100) engages said aperture (130) to retain the bimetallic actuator (104).

10. A control according to any of claims 4 to 7, wherein said body moulding (100) has a bimetallic actuator-carrying surface and two spaced-apart, transverse, side surfaces, and the trip lever (102) comprises a first elongate member (118) pivotally mounted at opposite ends thereof in respective formations (122) provided in respective ones of said side surfaces and a second member (110) spaced from said first elongate member (118), said second member (110) comprising abutment means (121) for cooperation with movement of the bimetallic actuator (104) and said first elongate member (118) carrying said trip lever part (120).

11. A control according to any preceding claim for use as a steam control in a water boiling vessel.

12. A control according to claim 11 integrated with a heating element overtemperature protection (dry boil) control.

13. A control according to claim 12, wherein said element overtemperature protection control comprises first and second, independently operable, temperature responsive switch means.

14. A control according to claim 13, wherein one of said temperature responsive switch means comprises a bimetallic element and the other comprises a fusible component.

15. A control according to claim 14, wherein said fusible component comprises a carrier for said bimetallic clement, said carrier being adapted to undergo switch-actuating forced deformation at a temperature higher than the normal operating temperature of said bimetallic element.

16. A control according to any of claims 12 to 15, wherein the steam control and the element overtemperature protection control share a common switch means.

17. An electrically heated water boiling vessel including a control as claimed in any preceding claim.

## Patentansprüche

1. Auf Temperatur ansprechende Steuerung für ein Gefäß zum Erhitzen von Flüssigkeit, umfassend einen Schnapp-Bimetallbetätigungselement (104), einen Auslösehebel (102), der schwenkbar angebracht ist, um auf die Betätigung des Bimetallbetätigungselements (104) anzusprechen, und ein Schaltermittel, das durch den Auslösehebel (102) betätigt wird, wobei das Schaltermittel eine Feder (116) umfasst, die betätigbar ist, um mit einer Federkraft mit einem Teil (120) des Auslösehebels (102) in Kontakt gezwungen zu werden, und eine Nockenoberfläche (132) aufweist, über welche der Teil (120) während der Schwenkbewegung des Auslösehebels (102) hinwegbewegt wird, um eine Schalterbetätigungsbewegung zu entwickeln, **dadurch gekennzeichnet, dass** die Feder (116) elektrisch leitfähig ist und angeordnet ist, um im Betrieb der Steuerung elektrischen Strom zu führen.

2. Steuerung nach Anspruch 1, wobei die Feder (116) ein Kniestück (132) aufweist, das die Nockenoberfläche bildet und einen Gelenkhebel mit dem Auslösehebelteil (120) bildet.

3. Steuerung nach Anspruch 1 oder Anspruch 2, wobei die Feder (116) selbst einen beweglichen Kontakt (134) des Schaltermittels bildet und beim Betrieb der Steuerung durch den Auslösehebelteil (120) in elektrischen Kontakt mit und aus elektrischem Kontakt mit einem fixen Kontakt (29) der Steuerung bewegt wird.

4. Steuerung nach einem der vorhergehenden Ansprüche, wobei das Schnapp-Bimetallbetätigungselement (104) ein gewölbtes, kreisförmiges Bimetall ist, das in einem Gehäuseformteil (100) der Steuerung festgehalten wird, wobei der Auslösehebel (102) schwenkbar an dem Gehäuseformteil (100) angebracht ist und die Feder (116) in dem Gehäuseformteil (100) vorgesehen ist.

5. Steuerung nach einem der vorhergehenden Ansprüche, wobei das Schnapp-Bimetallbetätigungselement (104) konfiguriert ist, um bei oder bei etwa 80 Grad Celsius von einem kalten Zustand in einen heißen Zustand zu schalten und um nach dem Schalten auf den Auslösehebel (102) zu wirken, um das Schaltermittel von einem Ein-zustand in einen Aus-Zustand zu schalten.

6. Steuerung nach Anspruch 5, wobei das Bimetallbetätigungselement (104) konfiguriert ist, um nach dem Abkühlen von dem heißen Zustand in den kalten zustand rückgesetzt zu werden, ohne das Schaltermittel in den Ein-Zustand zu schalten.

7. Steuerung nach Anspruch 6, wobei das Schaltermittel erst dann in seinen Ein-Zustand rückgesetzt werden kann, sobald das Bimetallbetätigungselement (104) nach dem Abkühlen von dem heißen Zustand in den kalten Zustand rückgesetzt wurde, und zwar durch manuelles Betätigen des Auslösehebels (102), um das Schaltermittel in den Ein-Zustand zu schalten.

8. Steuerung nach einem der Ansprüche 4 bis 7, wobei das Bimetallbetätigungselement (104) in eine Nut (106) eingesteckt ist, welche in dem Gehäuseformteil (100) ausgebildet ist, wobei die Nut (106) derart ausgebildet ist, dass sie die Bewegung eines Endes eines Durchmessers des Bimetallbetätigungselements (104) ermöglicht, während das entgegengesetzte Ende im Wesentlichen statisch bleibt.

9. Steuerung nach einem der Ansprüche 4 bis 8, wobei das Bimetallbetätigungselement (104) eine mittige Öffnung (130) aufweist und ein Abschnitt (108, 128) des Gehäuseformteils (100) mit der Öffnung (130) in Eingriff steht, um das Bimetallbetätigungselement (104) festzuhalten.

10. Steuerung nach einem der Ansprüche 4 bis 7, wobei das Gehäuseformteil (100) eine das Bimetallbetätigungselement tragende oberfläche und zwei voneinander beabstandete, quer verlaufende Seitenflächen aufweist und der Auslösehebel (102) ein erstes längliches Glied (118), das schwenkbar an entgegengesetzten Enden davon in jeweiligen Gebilden (122) angebracht ist, die in jeweiligen der Seitenflächen vorgesehen sind, und ein zweites Glied (110), das von dem ersten länglichen Glied (118) beabstandet ist, umfasst, wobei das zweite Glied (110) Stützmittel (121) zum zusammenwirken mit der Bewegung des Bimetallbetätigungselements (104) umfasst und das erste längliche Glied (118) den Auslösehebelteil (120) trägt.

11. Steuerung nach einem der vorhergehenden Ansprüche zur Verwendung als Dampfsteuerung in einem Wasserkocher.

12. Steuerung nach Anspruch 11, integriert mit einer Heizelementüberhitzungsschutzsteuerung (Trockengehschutzsteuerung).

13. Steuerung nach Anspruch 12, wobei die Elementüberhitzungsschutzsteuerung ein erstes und ein zweites unabhängig betätigbares, auf Temperatur ansprechendes Schaltermittel umfasst.

14. Steuerung nach Anspruch 13, wobei eines der auf Temperatur ansprechenden Schaltermittel ein Bimetallelement umfasst und das andere eine schmelzbare Komponente umfasst.

15. Steuerung nach Anspruch 14, wobei die schmelzbare Komponente einen Träger für das Bimetallelement umfasst, wobei der Träger ausgebildet ist, um bei einer Temperatur, die höher als die normale Betriebstemperatur des Bimetallelements ist, eine Schalterbetätigungs-Zwangsverformung zu erfahren.

16. Steuerung nach einem der Ansprüche 12 bis 15, wobei die Dampfsteuerung und die Elementüberhitzungsschutzsteuerung ein gemeinsames Schaltermittel nutzen.

17. Elektrisch beheizter Wasserkocher, umfassend eine Steuerung nach einem der vorhergehenden Ansprüche.

## Revendications

1. Commande sensible à la chaleur conçue pour un récipient de chauffage de liquide comprenant un actionneur bilame à action brusque (104), un levier de déclenchement (102) monté pivotant de manière à ce qu'il réagisse au fonctionnement dudit actionneur bilame (104) et des moyens formant commutateur actionnés par ledit levier de déclenchement (102), lesdits moyens formant commutateur comprenant un ressort (116) aptes à être poussé sous l'effet d'une force du ressort en contact avec une partie (120) dudit levier de déclenchement (102) et comprenant une surface de came (132) qui est traversée par ladite partie (120) au cours du mouvement de pivotement du levier de déclenchement (102) de manière à développer un mouvement d'actionnement de commutateur, **caractérisée en ce que** ledit ressort (116) est électriquement conducteur et est agencé pour conduire un courant électrique lors du fonctionnement de la commande.

2. Commande selon la revendication 1, dans laquelle le ressort (116) présente une courbure en forme de genou (132) qui constitue ladite surface de came et qui constitue une bascule avec ladite partie de levier de déclenchement (120).

3. Commande selon l'une quelconque des revendications 1 ou 2, dans laquelle ledit ressort (116) lui-même constitue un contact mobile (134) desdits moyens formant commutateur et est déplacé lors du fonctionnement de la commande par ladite partie de levier de déclenchement (120) en, et hors, contact électrique avec un contact fixe (29) de la commande.

4. Commande selon l'une quelconque des revendications précédentes, dans laquelle l'actionneur bilame à action brusque (104) est un bilame circulaire creux maintenu dans un corps moulé (100) de la commande, ledit levier de déclenchement (102) est monté pivotant sur ledit corps moulé (100) et ledit ressort (116) est disposé dans ledit corps moulé (100).

5. Commande selon l'une quelconque des revendications précédentes, dans laquelle ledit actionneur bilame à action brusque (104) est configuré pour commuter d'un état froid à un état chaud à, ou aux environs de, 80 degrés centigrade et, lors de la commutation, pour agir sur ledit levier de déclenchement (102) de manière à commuter les moyens formant commutateur d'un état en service vers un état hors service.

6. Commande selon la revendication 5, dans laquelle l'actionneur bilame (104) est configuré pour revenir dudit état chaud vers ledit état froid lors du refroidissement sans commuter les moyens formant commutateur vers ledit état en service.

7. Commande selon la revendication 6, dans laquelle les moyens formant commutateur peuvent seulement revenir vers leur état en service, une fois que l'actionneur bilame (104) est revenu dudit état chaud vers ledit état froid lors du refroidissement, en actionnant manuellement le levier de déclenchement (102) pour commuter les moyens formant commutateur vers ledit état en service.

8. Commande selon l'une quelconque des revendications 4 à 7, dans laquelle ledit actionneur bilame (104) est inséré dans une rainure (106) formée dans ledit corps moulé (100), ladite rainure (106) présentant une forme permettant le mouvement d'une extrémité d'un diamètre de l'actionneur bilame (104) tandis que l'extrémité opposée demeure sensiblement statique.

9. Commande selon l'une quelconque des revendications 4 à 8, dans laquelle l'actionneur bilame (104) présente une ouverture centrale (130) et une partie (108, 128) du corps moulé (100) vient en prise avec ladite ouverture (130) de manière à retenir l'actionneur bilame (104).

10. Commande selon l'une quelconque des revendications 4 à 7, dans laquelle ledit corps moulé (100) présente une surface de support d'actionneur bilame et deux surfaces latérales transversales espacées, et le levier de déclenchement (102) comprend un premier élément allongé (118) monté pivotant au niveau des extrémités opposées de celui-ci dans des structures respectives (122) disposées dans les surfaces respectives desdites surfaces latérales et un second élément (110) espacé dudit premier élément allongé (118), ledit second élément (110) comprenant des moyens de butée (121) pour coopérer avec le mouvement de l'actionneur bilame (104) et ledit premier élément allongé (118) supportant ladite partie de levier de déclenchement (120).

11. Commande selon l'une quelconque des revendications précédentes, destinée à être utilisée en tant que commande réagissant à la vapeur dans un récipient destiné à porter de l'eau à ébullition.

12. Commande selon la revendication 11 intégrée avec une commande de protection de surchauffe d'un élément chauffant (ébullition à sec).

13. Commande selon la revendication 12, dans laquelle ladite commande de protection de surchauffe de l'élément comprend des premier et second moyens formant commutateur sensibles à la température, et pouvant fonctionner de manière indépendante.

14. Commande selon la revendication 13, dans laquelle l'un desdits moyens formant commutateur sensibles à la température, comprend un élément bilame et l'autre comprend un composant fusible.

15. Commande selon la revendication 14, dans laquelle ledit composant fusible comprend un support dudit élément bilame, ledit support étant adapté pour subir une déformation due à l'actionnement du commutateur à une température supérieure à la température de fonctionnement normale dudit élément bilame.

16. Commande selon l'une quelconque des revendications 12 à 15, dans laquelle la commande réagissant à la vapeur et la commande de protection de surchauffe de l'élément, partagent des moyens communs formant commutateur.

17. Récipient chauffé de manière électrique destiné à porter de l'eau à ébullition, comprenant une commande selon l'une quelconque des revendications précédentes.
